# EUROPÄISCHE PATENTSCHRIFT

(11) **EP 2 795 771 B1**
(45) Veröffentlichungstag und Bekanntmachung des Hinweises auf die Patenterteilung: **27.03.2019**
(21) Anmeldenummer: 12809220.2
(22) Anmeldetag: 14.12.2012
(51) Int. Cl.: H02K 7/18, H02K 11/04

(54) **GENERATOR EINER GETRIEBELOSEN WINDENERGIEANLAGE**
GENERATOR OF A GEARLESS WIND TURBINE
GÉNÉRATEUR D'UNE ÉOLIENNE À ENTRAÎNEMENT DIRECT

(30) Priorität: 21.12.2011 DE 102011089498
(43) Veröffentlichungstag der Anmeldung: 29.10.2014
(73) Patentinhaber: Wobben Properties GmbH, 26607 Aurich (DE)
(72) Erfinder: GIENGIEL, Wojciech, 26607 Aurich (DE)
(74) Vertreter: Eisenführ Speiser
(86) Internationale Anmeldenummer: PCT/EP2012/075579
(87) Internationale Veröffentlichungsnummer: WO 2013/092423

(56) Entgegenhaltungen:
- EP-A1- 1 659 674
- EP-A1- 2 228 897
- DE-A1- 19 729 034
- US-A1- 2008 164 697
- US-A1- 2011 148 198

## Beschreibung

Die vorliegende Erfindung betrifft einen Generator einer getriebelosen Windenergieanlage und eine Windenergieanlage.

Windenergieanlagen sind allgemein bekannt. Sie wandeln Energie aus dem Wind in elektrische Energie. Hierbei wird ein aerodynamischer Rotor vom Wind angetrieben, der wiederum einen elektrischen Generator antreibt. Dabei kann unter anderem zwischen zwei generellen Typen von Windenergieanlagen unterschieden werden, nämlich solche, bei denen zwischen dem aerodynamischen Rotor und dem Generator ein Getriebe vorgesehen ist und solche, die getriebelos arbeiten.

Getriebelose Windenergieanlagen zeichnen sich dadurch aus, dass sie einen langsam laufenden, vielpoligen Generator, insbesondere Ringgenerator verwenden, der damit auch prinzipbedingt einen großen Durchmesser, insbesondere großen Luftspaltdurchmesser aufweist. Moderne getriebelose Windenergieanlagen können heutzutage einen Luftspaltdurchmesser von bis zu 10 m aufweisen. Zumindest sind Luftspaltdurchmesser von etwa 4,5 m heutzutage durchaus üblich. Insbesondere solche Generatoren betrifft auch die vorliegende Erfindung.

Solche Generatoren erzeugen im Betrieb üblicherweise zumindest ein dreiphasiges Wechselstromsystem, häufig sind zwei dreiphasige Systeme vorgesehen. Wenn die Windungen bzw Teilwicklungen jeder Phase jeweils in Reihe geschaltet sind, muss die Wicklung jeder Phase den gesamten Strom dieser Phase führen. Entsprechend sind sehr dicke Leiter oder Leiterstränge vorzusehen, um diesen Strom führen zu können. Um das zu vermeiden, kann die Wicklung jeder Phase in Teilwicklungen aufgeteilt werden, die parallel zueinander geschaltet werden. Dies hat den Vorteil, dass Formspulen verwendet werden können, wodurch insbesondere der Füllfaktor erhöht werden kann. Solche Teilwicklungen sind entsprechend über den gesamten Umfang des Generators verteilt und die Parallelschaltung kann über eine umlaufende Stromschiene für jede Phase erfolgen. Diese umlaufende Stromschiene sammelt dann den Strom der Phase. Der Strom einer solchen Sammelschiene entspricht dann im Wesentlichen dem Strom, der sich in dem Wicklungsstrang der Variante ergibt, bei der alle Teilwicklungen einer Phase in Reihe geschaltet sind. Diese Ströme können dann im Grunde bei beiden Varianten auf gleiche Art und Weise für eine Weiterverarbeitung, nämlich Einspeisung in ein elektrisches Netz, verwendet werden, indem sie mit einem Gleichrichter gleichgerichtet und damit einem Wechselrichter zur Einspeisung in das Netz bereitgestellt werden.

Die Parallelschaltung mehrerer Teilwicklungen erlaubt zwar jeweils Wicklungsstränge mit geringerem Querschnitt als im Fall der Reihenschaltung, die Verwendung der Sammelschienen kann aber ebenfalls Probleme bereiten. Insbesondere benötigen zwei dreiphasige Systeme sechs Sammelschienen. Diese Sammelschienen können als sechs Kreisringe mit entsprechender Isolation dazwischen zu einem etwa zylindrischen Sammelschienenkörper kombiniert werden, der jedoch Ausmaße annehmen kann, die Probleme an den Platzbedarf stellen. Sie können insbesondere die Befestigung des Generators, nämlich des Stators des Generators, behindern oder erschweren.

Das Deutsche Patent- und Markenamt hat in der Prioritätsanmeldung zu vorliegender Anmeldung folgenden Stand der Technik recherchiert: DE 197 29 034 A1, DE 20 52 808 A, US 6,894,411 B2, US 2009/0212568 A1, US 2010/0072834 A1, EP 2 472 714 A1 und WO 2006/100420 A1. Weitere Generatoren sind in US 2008/0164697 A1 und EP 2 228 897 A1 offenbart.

Aufgabe der vorliegenden Erfindung ist es somit, eines der oben genannten Probleme zu adressieren, insbesondere einen Generator einer getriebelosen Windenergieanlage hinsichtlich der Stromverteilung des erzeugten Stroms zu verbessern, insbesondere auch eine Lösung mit möglichst geringem Platzbedarf vorzuschlagen. Zumindest soll eine alternative Lösung gefunden werden.

Erfindungsgemäß wird somit ein Generator nach Anspruch 1 vorgeschlagen. Demnach weist der Generator einen Stator und einen Läufer auf. Der Stator trägt Statorwicklungen zum Erzeugen mehrerer Wechselströme, insbesondere wenigstens dreier zueinander phasenverschobener Wechselströme. Weiterhin sind Gleichrichtmittel zum Gleichrichten der Wechselströme vorgesehen. Die Gleichrichtmittel sind somit Teil des Generators. Am Stator bzw. unmittelbar benachbart dazu sind Gleichstromsammelleitungen, insbesondere Gleichstromsammelschienen zum Sammeln der zu Gleichstrom gleichgerichteten Wechselströme vorgesehen. Die Gleichstromsammelschienen sind somit ebenfalls Teil des Generators und die Gleichrichtmittel sind zwischen den Sammelschienen angeordnet, insbesondere verschaltet und auch örtlich dort angeordnet. Die Gleichstromsammelschienen nehmen somit die gesamten erzeugten und gleichgerichteten Ströme auf. Insbesondere beim Vorsehen von nur zwei Gleichstromsammelschienen, nämlich eine für positives und eine für negatives Potential, fließt der gesamte gleichgerichtete Strom über jede Gleichstromsammelschiene. Aus diesem Grunde sind die Gleichstromsammelleitungen zweckmäßigerweise als Gleichstromsammelschienen ausgebildet. Auch eine feste örtliche Anordnung am Stator ist zweckmäßigerweise mit einer Schiene zu realisieren, wobei eine anders geartete Gleichstromsammelleitung nicht auszuschließen ist.

Die Lösung sieht somit vor, die erzeugten Wechselströrme bereits am Generator, nämlich am Stator, gleichzurichten und erst die gleichgerichteten Ströme, die sich zu einem entsprechend großen Gleichstrom addieren, vom Ort ihrer Entstehung weiterzuleiten. Hier liegt insbesondere der Gedanke zugrunde, dass die Generatoren einer getriebelosen Windenergieanlage eine große örtliche Ausdehnung aufweisen. Im Falle eines Generators mit einem Durchmesser von 5 m ergibt sich ein Umfang von über 15 m, an dem ein Teil der Ströme entlang geleitet werden muss mit den entsprechenden Leitungen. Selbst bei einem dreiphasigen Strom müssten hierzu zumindest drei Leitungen vorgesehen sein. Im Falle eines sechsphasigen Systems sind sogar sechs Leitungen vorzusehen, die je nach Stromgröße auch als Sammelschienen vorgesehen sein könnten. Durch die Gleichrichtung vor Ort brauchen nur noch zwei Gleichstromsammelschienen vorgesehen zu sein.

Darüber hinaus kann ein separater Gleichrichter eingespart werden, wenn die Gleichrichtung direkt am Generator erfolgt. Die Gleichrichtmittel des Generators können jeweils wenigstens aus einem Diodenpaar oder aus wenigstens einem Thyristorpaar gebildet sein, wobei jeweils eine Diode bzw. ein Thyristor jeweils zwischen einem Wechselstromanschluss der Statorwicklungen und einer Gleichstromsammelschiene angeordnet ist und eine weitere Diode bzw. ein weiterer Thyristor zwischen diesem Wechselstromanschluss und der zweiten Gleichstromsammelschiene. Die Gleichrichtung erfolgt grundsätzlich auf bekannte Art und Weise unter Verwendung bekannter Gleichrichtmittel, die dabei insbesondere in der Dimensionierung dem konkreten Aufbau dieses Generators angepasst sind.

Gemäß einer Ausgestaltung ist der Generator als Synchrongenerator ausgebildet, insbesondere als fremderregter Synchrongenerator. Bei einem Synchrongenerator rotiert ein Läufer mit festem Magnetfeld, das im Falle des fremderregten Synchrongenerators durch entsprechende Gleichströme bzw. entsprechenden Gleichstrom als Erregerstrom erzeugt wird, und durch die Drehung erzeugt der Läufer im Stator und damit in den Statorwicklungen ein entsprechendes Drehfeld und dadurch die mehreren Wechselströme. Bei einem Außenläufer liegt der Stator relativ zum Läufer innen, wodurch nach innen viel Raum für die Gestaltung des Stators bleibt. Somit findet sich Raum für die Anordnung der Gleichrichtmittel und der Gleichstromsammelschienen und ebenfalls Raum zum Vorsehen einer Kühlung, die ggf. auch zum Kühlen der Gleichrichtmittel verwendet werden kann.

Gemäß der Erfindung sind die Sammelschienen ringförmig ausgebildet, erstrecken sich entlang des Stators und sind axial zueinander beabstandet. Gemäß einer Ausführungsform sind die Gleichrichtmittel und/oder die Gleichstromsammelleitungen, insbesondere Gleichstromsammelschienen an dem Generator, insbesondere Stator befestigt, insbesondere so, dass sie mit dem Generator zusammen gekühlt werden. In diesem Fall liegen die Gleichstromsammelschienen so bei oder an dem Stator oder einer Kühleinrichtung und/oder einem Kühlkörper des Stators oder des Generators, dass die für den Generator vorgesehene Kühlung auch für die Gleichstromsammelschienen und/oder die Gleichrichtmittel wirkt. Insbesondere wird die Anordnung so gewählt, dass ein Luftstrom zum Kühlen des Generators auch für die Gleichstromsammelschienen und/oder die Gleichrichtmittel die Kühlung übernimmt. Der Stator kann hierdurch die Kühlung insbesondere für die Gleichrichtmittel mit übernehmen.

Gemäß einer Ausführungsform wird vorgeschlagen, dass die Wechselströme ein System mit wenigstens drei Phasen bilden, also ein Dreiphasensystem, insbesondere ein Sechsphasensystem bilden. Ein Sechsphasensystem ist dabei insbesondere ein System aus zwei Dreiphasensystemen. Die Phasen eines Dreiphasensystems sind um 120° zueinander verschoben und zwei dreiphasige Systeme sind zueinander um etwa 30° verschoben, so dass dann sechs Phasen vorhanden sind, von denen zwei benachbarte jeweils um 30° verschoben sind. Die Statorwicklungen weisen jeweils eine Phasenwicklung für jede Phase auf.

Die Phasenwicklungen sind vorzugsweise in Teilphasenwicklungen unterteilt. Somit gibt es für das Beispiel von sechs Phasen im Grunde einen Satz Statorwicklungen, nämlich die Gesamtheit aller Wicklungen des Stators, sechs Phasenwicklungen und insgesamt für den gesamten Stator wenigstens 12 Teilphasenwicklungen, nämlich wenigstens zwei für jede Phase für das genannte Beispiel.

Jede Teilphasenwicklung ist über eines der Gleichrichtmittel mit wenigstens zwei Sammelschienen verbunden. Somit wird für jede Teilphasenwicklung eine Gleichrichtung vorgenommen und der jeweilige Wechselstrom der Teilphasenwicklung gleichgerichtet als Gleichstrom auf die beiden Sammelschienen gespeist. In obigem Beispiel wären demnach wenigstens 12 Gleichrichtmittel vorgesehen und entsprechend würde an 12 über den Generator verteilten Stellen Gleichstrom in die Sammelschienen eingeleitet.

Insbesondere sind jeweils drei Phasen über einen gemeinsamen Sternpunkt verschaltet. Im oben genannten Beispiel bei sechs Phasen und sechs Phasenwicklungen und 12 Teilphasenwicklungen würden jeweils sechs Teilphasenwicklungen einen gemeinsamen Sternpunkt aufweisen. Somit sind zwei gemeinsame Sternpunkte vorhanden, nämlich einer für jedes der beiden dreiphasigen Systeme.

Somit ist eine Parallelschaltung von Teilphasenwicklungen möglich, die für den gesamten Generator mit zwei Gleichstromsammelschienen auskommt. Durch die im Grunde übliche Verschaltung im Sternpunkt braucht bei der Gleichrichtung nur jeweils ein Anschlusspunkt je Teilphasenwicklung berücksichtigt zu werden.

Günstig ist es, wenn wenigstens sechs Gleichrichtmittel, vorzugsweise wenigstens 12, wenigstens 24 oder wenigstens 48 Gleichrichtmittel vorgesehen und in Umfangsrichtung über den Generator verteilt sind. Hierbei ist es günstig, als Anzahl der Gleichrichtmittel ein Vielfaches der Anzahl der Phasen zu verwenden, so dass für jede Phase jeweils mehrere Gleichrichtmittel vorgesehen sind, nämlich insbesondere auch entsprechend viele Teilphasenwicklungen vorhanden sind. Es ist grundsätzlich vorteilhaft, sehr viele Gleichrichtmittel vorzusehen, die dann jeweils entsprechend klein ausfallen können. Damit wird zum einen eine Wärmequelle in viele kleine Wärmequellen aufgeteilt, so dass die Wärmequelle räumlich verteilt ist. Zum anderen bilden kleinere Halbleiterbauelemente, wie Dioden oder Thyristoren, grundsätzlich eher ein Massenprodukt und sind damit kostengünstig und erprobt erhältlich, als wenn die Halbleiterbauelemente besonders groß ausgestaltet sind. Zudem kann schließlich ein eigenes Gehäuse für die Gleichrichtmittel vermieden werden. Durch diese Variante kann nämlich ein kompakter Gleichrichter, der den gesamten Strom des Generators gleichrichtet, vermieden werden. Ein solcher separater Gleichrichter kann sehr groß ausfallen, benötigt für den entsprechend großen Strom ausgelegte Halbleiterbauelemente und die dazu notwendige Kühlung. Stattdessen wird vorgeschlagen, die Wechselströme direkt dort, wo sie entstehen, gleichzurichten und sie somit gleichzurichten, bevor sie zu einem großen Wechselstrom summiert werden.

Vorzugsweise weist der Generator eine Nennleistung von wenigstens 500kW, wenigstens 1 MW, insbesondere wenigstens 2 MW auf. Dies unterstreicht, dass ein großer, moderner Generator verwendet wird, bei dem die genannten Probleme eine große Rolle spielen können. Insbesondere benötigt auch ein solcher großer Generator zur Weiterverarbeitung des erzeugten Stromes einen entsprechend großen Gleichrichter, der ein spezielles und damit teures und Wärme erzeugendes Gerät darstellt. Im Ergebnis kann sogar in der Gondel einer Windenergieanlage ein entsprechender Schaltschrank für den Gleichrichter eingespart werden.

Gemäß einer weiteren Ausführungsform wird vorgeschlagen, dass der Generator als langsam laufender Generator und/oder als vielpoliger Generator mit wenigstens 48, 72, 96, insbesondere wenigstens 192 Statorpolen ausgebildet ist und/oder als dreiphasiger oder sechsphasiger Generator ausgebildet ist. Insbesondere bei solchen vielpoligen Generatoren ist die vorgeschlagene Lösung effizient einsetzbar, weil hier viele Gleichrichtermittel über den Generator verteilt werden können, um jeweils einen kleinen Teil des Stromes der erzeugten Leistung gleichzurichten. Grundsätzlich kann auch ein bekannter dreiphasiger oder sechsphasiger Generator verwendet werden, der durch das Vorsehen der Gleichrichtmittel und der Gleichstromsammelschienen modifiziert wird.

Von den Ansprüchen nicht umfasst ist zudem ein Ringgleichrichter zum Gleichrichten mehrerer von einem Generator erzeugter Wechselströme. Ein solcher Ringgleichrichter umfasst wenigstens drei Gleichrichtmittel zum Gleichrichten jeweils eines der erzeugten Wechselströme und er umfasst wenigstens zwei ringförmig angeordnete und in ihrer Größe an den Generator angepasste Gleichstromsammelleitungen, insbesondere Gleichstromsammelschienen, zum Aufnehmen der gleichgerichteten Wechselströme. Insbesondere ist der Ringgleichrichter so ausgebildet, wie oben die beiden Sammelschienen zusammen mit den Gleichrichtmitteln beschrieben wurden, wobei die Gleichrichtmittel dazu vorbereitet sind, jeweils an eine Phasenwicklung bzw. Teilphasenwicklung angeschlossen zu werden, um dort den erzeugten Wechselstrom aufzunehmen und gleichzurichten. Der Ringgleichrichter ist insbesondere dazu angepasst, mit einem Generator so verbunden zu werden, dass der Ringgleichrichter und der Generator zusammen einen neuen Generator bilden, nämlich wie in wenigstens einer der obigen Ausführungsformen erläutert wurde.

Vorzugsweise ist der Ringgleichrichter dadurch gekennzeichnet, dass die Gleichrichtermittel gesteuert sind und mit Steuerleitungen zum Steuern der Gleichrichtmittel verbunden sind. Eine solche Ausgestaltung betrifft insbesondere Gleichrichtmittel, die aus Thyristoren und/oder IGBTs gebildet sind, die angesteuert werden müssen. Im Übrigen können solche Steuerleitungen auch für den beschriebenen Generator vorgesehen sein, um dort die Gleichrichtmittel anzusteuern. Durch ganz oder teilweise gesteuerte Gleichrichtmittel kann mitunter die Gleichrichtung verbessert werden, beispielsweise hinsichtlich Verlusten an den entsprechenden Halbleiterbauelementen. Darüber hinaus kann es mitunter für die Steuerung des Generators vorteilhaft sein, durch den Gleichrichter, also hier durch die Gleichrichtmittel, auf den vom Generator entnommenen Strom und damit auf den Generator einzuwirken, um diesen ggf. teilweise zu steuern.

Weiterhin wird eine Windenergieanlage mit einem Generator, wie in wenigstens einer der obigen Ausführungsformen beschrieben, vorzusehen. Dieser hat vorzugsweise einen wie oben beschriebenen Ringgleichrichter.

Nachfolgend wird die Erfindung anhand von Ausführungsbeispielen unter Bezugnahme auf die begleitenden Figuren näher erläutert.
- Fig. 1: zeigt eine Windenergieanlage in einer perspektivischen Darstellung.
- Fig. 2: zeigt schematisch einen Generator, mit Rotor, Stator, Gleichstromsammelschienen und Gleichrichtmitteln.
- Fig. 3: zeigt schematisch in einer Schnittdarstellung einen Teil eines Ringgenerators mit Gleichstromsammelschienen und Gleichrichtmitteln.
- Fig. 4: zeigt die Gleichstromsammelschienen mit Gleichrichtmittel der Fig. 3 in einer vergrößerten Darstellung.
- Fig. 5: zeigt einen Ausschnitt aus zwei Gleichstromsammelschienen in einer perspektivischen Darstellung.
- Fig. 6: zeigt schematisch einen Ausschnitt eines Generators gemäß dem Stande der Technik mit sechs Wechselstromsammelschienen.

Nachfolgend können identische Bezugszeichen für ähnliche aber ggf. nicht identische oder aufgrund der schematischen Darstellung nicht identisch dargestellte Elemente verwendet werden. Für identische oder ähnliche Elemente können unterschiedliche Maßstäbe verwendet werden.

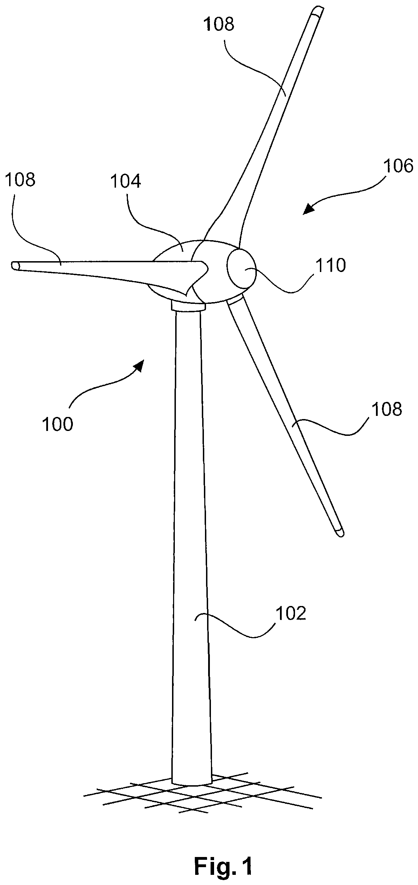

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

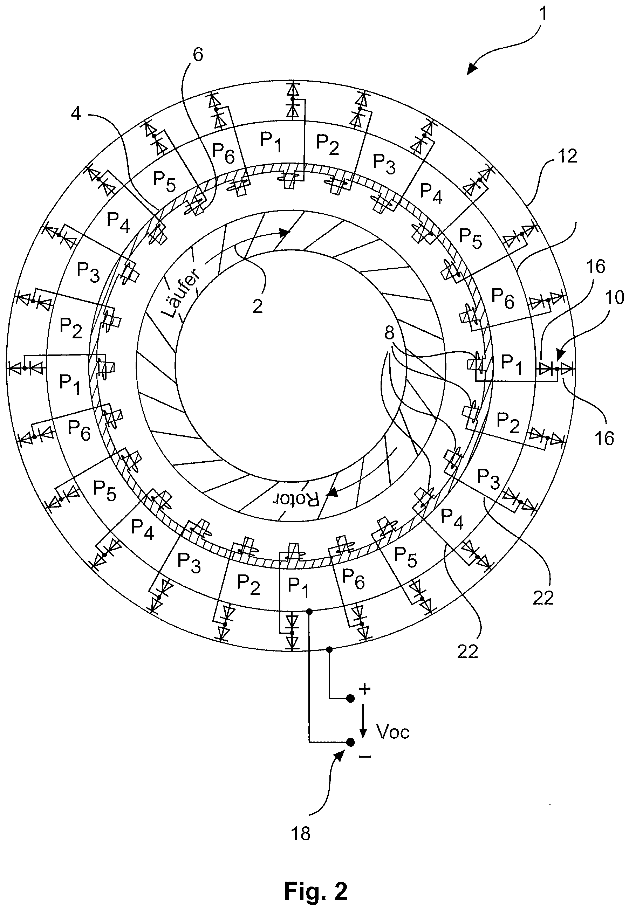

Fig. 2 zeigt schematisch einen Generator 1 mit einem sehr vereinfacht dargestellten Läufer 2 bzw. Rotor 2 und einem Stator 4. Der Läufer 2 dreht sich bestimmungsgemäß relativ zum Stator 4, der bestimmungsgemäß zumindest hinsichtlich der Drehbewegung des Läufers stillsteht. Der veranschaulicht dargestellte Stator 4 weist 24 Pole 6 auf. Die Darstellung mit 24 Polen ist lediglich zur Veranschaulichung gewählt. Die Erfindung ist vielmehr vorzugsweise für wesentlich mehr Pole vorgesehen. Auch auf den Abstand zwischen den Polen 6, der hier wesentlich größer als in einem vergleichbaren realen System ist, kommt es nicht an und er ist nur ein Ergebnis der schematischen Darstellung. Vielmehr soll die Fig. 2 der Veranschaulichung der Verschaltung und ihrer örtlichen Verteilung über den Umfang des Generators dienen.

Gemäß Fig. 2 weist jeder Pol 6 eine Teilphasenwicklung 8 auf. In der Darstellung der Fig. 2 ist jede Teilphasenwicklung 8 einem Pol 6 zugeordnet. Das ist jedoch nur ein veranschaulichendes Beispiel. Ebenso kann eine Teilphasenwicklung 8 die Reihenschaltung von Wicklungen mehrerer Statorpole sein.

Gemäß des veranschaulichenden Beispiels der Fig. 2 sind jedenfalls insgesamt 24 Teilphasenwicklungen 8 vorgesehen, nämlich jeweils vier zu jeder Phase. Die Phasen sind in der Fig. 2 mit P₁ bis P₆ bezeichnet. Zwei benachbarte Phasen sind jeweils um 30° zueinander verschoben. Somit sind zwei Dreiphasensysteme vorgesehen, nämlich ein erstes Dreiphasensystem mit den Phasen P₁, P₃ und P₅ und ein zweites Dreiphasensystem mit den Phasen P₂, P₄ und P₆. Dabei sind jeweils die Phasen eines Dreiphasensystems, also P₁, P₃ und P₅ einerseits und P₂, P₄ und P₆ andererseits über einen gemeinsamen Sternpunkt verschaltet, der in der Fig. 2 aber nicht dargestellt ist.

Jede Teilphasenwicklung 8 ist über ein Gleichrichtmittel 10 mit zwei Gleichstromsammelschienen 12, 14, nämlich der positiven Gleichstromsammelschiene 12 und der negativen Gleichstromsammelschiene 14 verbunden. Jedes Gleichrichtmittel 10 weist zum Gleichrichten zwei Dioden 16 auf. Hier wurden zur Veranschaulichung Dioden als klassische Elemente zum Gleichrichten verwendet. Statt Dioden können beispielsweise auch Thyristoren oder IGBTs verwendet werden.

Somit sind im vorliegenden Beispiel 24 Gleichrichtmittel 10 über den Umfang des Generators 1, insbesondere über den Umfang des Stators 4 verteilt. Jede Phase ist in diesem Beispiel auf jeweils vier Teilphasenwicklungen 8 aufgeteilt und somit wird auch die Gleichrichtung für jede Phase an vier unterschiedlichen Positionen, nämlich etwa in 90°-Abständen über den Generator verteilt, vorgenommen. Es werden somit in dem gezeigten Beispiel 24 Wechselströme durch 24 Gleichrichtmittel 10 gleichgerichtet und die sich ergebenden Teilgleichströme sind schließlich, aufsummiert als ein Gleichstrom bzw. als ein positiver und ein negativer Gleichstrom, in den beiden Gleichstromschienen 12 und 14 vorhanden. Die beiden Gleichstromsammelschienen 12 und 14 führen somit die gesamte von dem Generator 1 erzeugte elektrische Leistung und stellen sie an einem Gleichstromausgang 18 mit einer entsprechenden Gleichspannung U_{DC} bereit. Die Gleichrichtmittel 10, die im gezeigten Beispiel jeweils nur ein 1/24 der Leistung gleichrichten müssen, die letztlich von den Gleichstromsammelschienen 12 und 14 geführt wird, können entsprechend klein ausgeführt werden. Entsprechend kommt auch in Betracht, vergleichbare Standardbauteile einzusetzen, die kostengünstig und erprobt sind.

Die Fig. 2 zeigt die Gleichstromsammelschienen 12 und 14 mit unterschiedlichem Durchmesser zueinander und mit größerem Durchmesser gegenüber dem Stator 4. Die Darstellung der Fig. 2 ist jedoch nur eine Veranschaulichung und vorzugsweise sind der Stator 4, die positive Gleichstromsammelschiene 12 und die negative Gleichstromsammelschiene 14 nicht radial, sondern axial zueinander beabstandet.

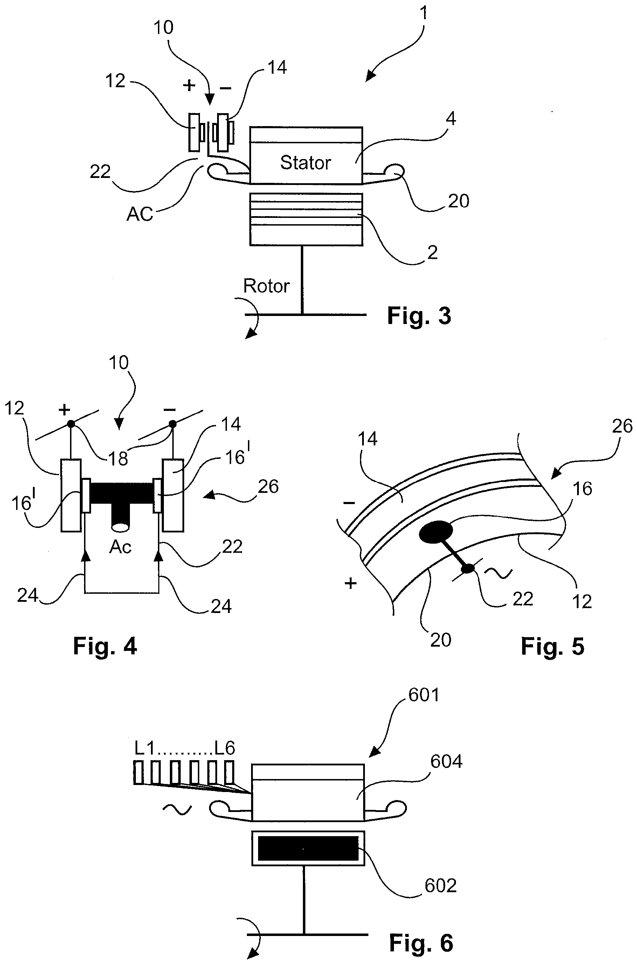

Fig. 3 zeigt einen Ausschnitt aus einem Generator in einer Ansicht in Umfangsrichtung des Generators 1. Der Generator 1 weist dabei einen Läufer 2 und einen Stator 4 mit Wickelköpfen 20 auf. An dem Stator 4 sind gemäß Fig. 3 an der linken Seite und damit in axialer Richtung eine positive Gleichstromsammelschiene 12 und eine negative Gleichstromsammelschiene 14 dargestellt. Zwischen diesen beiden Gleichstromsammelschienen 12, 14 ist das Gleichrichtmittel 10 angeordnet und über einen Wechselstromanschluss 22 mit einer entsprechenden Wicklung, insbesondere Teilphasenwicklung verschaltet, die in der Fig. 3 aber nicht näher dargestellt ist.

Somit funktioniert der gezeigte Generator 1 so, dass sich der Rotor bzw. Läufer 2 relativ zum Stator 4 dreht, im Stator 4 werden dabei eine Vielzahl von Wechselströmen erzeugt, die jeweils über Gleichrichtmittel 10 gleichgerichtet und auf die beiden Gleichstromsammelschienen 12, 14 übertragen werden. Es ist somit ein Rotor 2 bzw. Läufer 2 und ein Stator 4 vorgesehen, ebenfalls ist eine positive Gleichstromsammelschiene 12 und eine negative Gleichstromsammelschiene 14, aber sehr viele Gleichrichtmittel 10 vorgesehen, von den nur eines in Fig. 3 gezeigt ist.

Fig. 2 zeigt dabei die Verteilung solcher Gleichstrommittel 10 über den Umfang des Generators 1 schematisch. Im Übrigen können die positive Gleichstromsammelschiene 12 mit der negativen Gleichstromsammelschiene 14 und der Vielzahl der Gleichrichtmittel 10 und schließlich den Gleichstromanschlüssen 18 als Ringgleichrichter angesehen werden. Die Wechselstromanschlüsse 22 können teilweise als Element eines solchen Ringgleichrichters angesehen werden. Entsprechend ist ein solcher Ringgleichrichter separat vom Rest des Generators 1 vorbereitbar und braucht beim Zusammenbau mit diesem restlichen Generator 1 lediglich an seinen Wechselstromanschlüssen 22 mit den jeweiligen Teilphasenwicklungen 8 elektrisch verbunden zu werden.

Durch das Vorsehen von Gleichstromsammelschienen 12, 14 kann hierbei auch ein insgesamt mechanisch stabiles Gebilde geschaffen werden.

Fig. 4 zeigt einen Ausschnitt der Fig. 3, nämlich die positive Gleichstromsammelschiene 12, die negative Gleichstromsammelschiene 14, die Gleichrichtmittel 10, von denen die Darstellung der Fig. 4 nur eines zeigt und die Wechselstromanschlüsse 22, von denen die Fig. 4 aufgrund der gewählten Darstellung auch nur einen zeigt. Das Gleichrichtmittel 10 kann zwei Thyristoren 16' jeweils als gleichrichtendes Bauelement aufweisen. Zwischen zwei Thyristoren 16' ist der Wechselstromanschluss 22 angeordnet. Die Thyristoren 16' können über Steuerleitungen 24 angesteuert werden. Auch bei der Verwendung von IGBTs wären diese anzusteuern, was durch die Ansteuerleitung 24 bzw. entsprechend angepasste Ansteuerleitungen erreicht werden kann.

Dieser Ausschnitt der Fig. 3, der in Fig. 4 dargestellt ist, zeigt somit einen Ringgleichrichter 26. Wird dieser mit dem Generator 1, insbesondere mit dem Stator 4 verbunden, wie es in Fig. 3 gezeigt ist, ist dieser Ringgleichrichter 26 Teil des Generators 1. In Fig. 4 sind zudem noch schematisch die Gleichstromanschlüsse 18 angedeutet.

Fig. 5 zeigt einen Ausschnitt eines Ringgleichrichters 26 in einer perspektivischen Darstellung. Hier wird die Anordnung der positiven Gleichstromsammelschiene 12 zu der gemäß Fig. 5 dahinter liegenden negativen Gleichstromsammelschiene 14 verdeutlicht. Zwischen diesen beiden Gleichstromsammelschienen 12, 14 ist das Gleichrichtmittel 10 mit dem Wechselstromanschluss 22 zur Erläuterung eingezeichnet. Von dem Gleichrichtmittel 10 ist ein Thyristor 16' als im Grunde rundes Bauteil dargestellt. Tatsächlich würde natürlich die in der Fig. 5 vorne liegende positive Gleichstromsammelschiene 12 diesen Thyristor 16' verdecken, der hier nur zur Veranschaulichung dargestellt ist.

Fig. 6 zeigt in Anlehnung an die in Fig. 3 gewählte Perspektive einen Generator 601 mit einem Läufer 602 und einem Stator 604. Auch hier sind mehrere Teilphasenwicklungen vorgesehen, die zur Parallelschaltung phasenweise jeweils an eine Wechselstromschiene L1 bis L6 angeschlossen sind. Die Wechselstromschienen L1 bis L6 sind von dem Stator 604 aus gemäß der Darstellung nach links und damit in axialer Richtung angeordnet. Es ist zu erkennen, dass hier ein ganz erheblicher Raumbedarf besteht, obgleich nicht einmal Halbleiterbauelemente enthalten sind. Jedoch ist gemäß der gezeigten bekannten Lösung für jede Phase eine getrennte Wechselstromsammelschiene vorzusehen, die zu den anderen Wechselstromsammelschienen elektrisch zu isolieren ist. Auch müssen alle sechs Wechselstromsammelschienen L1 bis L6 mechanisch ausreichend befestigt sein, was aufgrund der gezeigten räumlichen Ausgestaltung Probleme bereiten kann.

Fig. 6 verdeutlicht somit, dass zum Zusammenschalten von Formspulen in einem großen Ringgenerator Sammelschienen benötigt werden. Entsprechend benötigen Generatoren mit mehreren Phasen entsprechend viele Ringe solcher Sammelschienen, nämlich einen pro Phase. Es wird somit vorgeschlagen, einen Ringgleichrichter zu bauen, um das Problem zu vermeiden und damit insbesondere die Anzahl der Ringe zu verringern und dabei auch das vorhandene Volumen besser auszunutzen. Die Lösung schafft die Möglichkeit, mit zwei Gleichstromsammelschienen 12 und 14, also mit zwei Ringen, auszukommen. Auch für die vorgeschlagene Lösung können die Teilphasenwicklungen mittels Formspulen realisiert werden. Solche Formspulen werden entsprechend in dem Stator über die entsprechenden Statorpole, wie beispielsweise die Pole 6 der Fig. 2, geschoben.

Die aufgezeigte Lösung benötigt mehr Teile, insbesondere mehr Gleichrichtmittel. Die Gleichrichtmittel als solche werden aber in der Bauform kleiner. Kleinere Einheiten werden somit jeweils weniger Energie übertragen. Die Lösung schafft somit eine günstige Möglichkeit, Formspulen im Stator parallelzuschalten.

Entsprechend wird vorgeschlagen, in einem Generator, in dem die Statorwicklungen parallelgeschaltet sind, das entstehende Volumenproblem durch Sammelschienen durch die Verwendung eines Ringgleichrichters zu lösen. Dieser könnte so ausgebildet sein, dass die Wicklungen mit kleinen Gleichrichtern, bestehend aus Dioden, Thyristoren oder IGBTs ausgestattet werden und an Plus und Minus über Schienen zusammengeschaltet werden.. Die Anzahl der Ringe für solche Sammelschienen kann sich hierdurch auf bis zu zwei minimieren, eventuell auf drei, wenn man alle Wicklungen über einen Ring auf einen Sternpunkt schaltet. Ein solcher Gleichrichter kann mit der Generatorkühlung gekühlt werden, wenn er auf dem Generator montiert wird. Je nach Ausgestaltung braucht kein zusätzliches Gehäuse oder zusätzliche Kühlung vorgesehen zu werden. Entsprechend schafft die vorgeschlagene Lösung die Möglichkeit einer Integration des Gleichrichters mit dem Generator. Eine Benutzung der Generatorkühlung wird ermöglicht und die Lösung ist dabei platzsparend.

## Patentansprüche

1. Generator (1) einer getriebelosen Windenergieanlage (100), mit einem Stator (4) und einem Läufer (2), umfassend:
- Statorwicklungen (8) zum Erzeugen mehrerer Wechselströme, insbesondere wenigstens dreier, zu einander phasenverschobener Wechselströme, und
- Gleichrichtmittel (10) zum Gleichrichten der Wechselströme, wobei der Generator (1) als Außenläufer ausgebildet ist, und wenigstens zwei Gleichstromsammelschienen (12, 14) zum Sammeln der gleichgerichteten Wechselströme vorgesehen sind, **gekennzeichnet dadurch**
- **dass** die Gleichstromsammelschienen (12, 14) ringförmig ausgebildet sind, sich entlang des Stators (4) erstrecken und axial zueinander beabstandet sind,
- **dass** die Gleichstromsammelschienen (12, 14) thermisch mit einer Kühlung des Generators (1) verbunden sind und
- **dass** die Gleichrichtmittel zwischen den Gleichstromsammelschienen (12, 14) angeordnet sind.

2. Generator (1) nach Anspruch 1, **dadurch gekennzeichnet, dass** der Generator (1) als Synchrongenerator, insbesondere als fremderregter Synchrongenerator ausgebildet ist.

3. Generator (1) nach einem der vorstehenden Ansprüche, **dadurch gekennzeichnet, dass** die Gleichrichtmittel (10) in Umfangsrichtung des Generators (1) entlang des Stators (4) und/oder entlang der Sammelschienen (12, 14) verteilt sind.

4. Generator (1) nach einem der vorstehenden Ansprüchen, **dadurch gekennzeichnet, dass** sechs Gleichrichtmittel (10) vorgesehen und in Umfangsrichtung über den Generator (1) verteilt sind, insbesondere dass wenigstens sechsmal so viele Gleichrichtmittel (10) wie Sammelschienen (12, 14) vorgesehen sind.

5. Generator (1) nach einem der vorstehenden Ansprüche, **gekennzeichnet durch** eine Nennleistung von wenigstens einem MW, insbesondere von wenigstens zwei MW.

6. Generator (1) nach einem der vorstehenden Ansprüche, **dadurch gekennzeichnet, dass** der Generator (1) als langsam laufender Generator (1) und/oder als vielpoliger Generator (1) mit wenigstens 48, wenigstens 72, wenigstens 96, insbesondere wenigstens 192 Statorpolen (6) ausgebildet ist und/oder als 6-phasiger Generator (1) ausgebildet ist.

7. Windenergieanlage (100) mit einem Generator (1) nach einem der Ansprüche 1 bis 6.

## Claims

1. A generator (1) of a gearless wind power installation (100) comprising a stator (4) and a rotor member (2), including:
- stator windings (8) for generating a plurality of alternating currents, in particular at least three mutually phase-displaced alternating currents, and
- rectifying means (10) for rectifying the alternating currents,
wherein
the generator is in the form of an external rotor member, and
- at least two direct current busbars (12, 14) for collecting the rectified alternating currents are provided,
**characterized in that**
- the direct current busbars (12, 14) are of an annular configuration, extending approximately along the stator (4) and are axially spaced to each other,
- that the direct current busbars (12, 14) are thermally connected to a cooling means of the generator (1) and
- that the rectifying means (10) are disposed between the direct current busbars (12, 14).

2. A generator (1) according to claim 1 **characterised in that** the generator (1) is in the form of a synchronous generator, in particular a separately excited synchronous generator.

3. A generator (1) according to one of the preceding claims **characterised in that** the rectifying means (10) are distributed in the peripheral direction of the generator (1) along the stator (4) and/or along the busbars (12, 14).

4. A generator (1) according to one of the preceding claims **characterised in that** there are provided six rectifying means (10) distributed in the peripheral direction over the generator (1), and in particular there are provided at least six times as many rectifying means (10) as busbars (12, 14).

5. A generator (1) according to one of the preceding claims **characterised by** a nominal power of at least one MW, in particular at least two MW.

6. A generator (1) according to one of the preceding claims **characterised in that** the generator (1) is in the form of a slowly rotating generator (1) and/or a multi-pole generator (1) having at least 48, at least 72, at least 96, in particular at least 192 stator poles (6) and/or is in the form of a 6-phase generator (1).

7. A wind power installation (100) comprising a generator (1) according to one of claims 1 to 6.

## Revendications

1. Générateur (1) d'une éolienne (100) à entraînement direct, avec un stator (4) et un rotor (2), comprenant :
- des enroulements de stator (8) servant à générer plusieurs courants alternatifs, en particulier au moins trois courants alternatifs décalés en phase les uns par rapport aux autres, et
- des moyens de redressement (10) servant à redresser les courants alternatifs,
dans lequel
le générateur (1) est réalisé sous la forme d'un rotor extérieur,
et
au moins deux barres omnibus de courant continu (12, 14) sont prévues pour collecter les courants alternatifs redressés, **caractérisé en ce que**
- les barres omnibus de courant continu (12, 14) sont réalisées en forme annulaire, s'étendent le long du stator (4) et sont espacées axialement les unes des autres,
- les barres omnibus de courant continu (12, 14) sont reliées thermiquement à un système de refroidissement du générateur (1), et
- les moyens de redressement sont disposés entre les barres omnibus de courant continu (12, 14).

2. Générateur (1) selon la revendication 1, **caractérisé en ce que** le générateur (1) est réalisé sous la forme d'un générateur synchrone, en particulier sous la forme d'un générateur synchrone à excitation extérieure.

3. Générateur (1) selon l'une quelconque des revendications précédentes, **caractérisé en ce que** les moyens de redressement (10) sont répartis dans la direction périphérique du générateur (1) le long du stator (4) et/ou le long des barres omnibus (12, 14).

4. Générateur (1) selon l'une quelconque des revendications précédentes, **caractérisé en ce que** six moyens de redressement (10) sont prévus et sont répartis dans la direction périphérique au-dessus du générateur (1), en particulier **en ce qu'**au moins six fois plus de moyens de redressement (10) sont prévus que de barres omnibus (12, 14).

5. Générateur (1) selon l'une quelconque des revendications précédentes, **caractérisé par** une puissance nominale d'au moins un MW, en particulier d'au moins deux MW.

6. Générateur (1) selon l'une quelconque des revendications précédentes, **caractérisé en ce que** le générateur (1) est réalisé sous la forme d'un générateur (1) lent et/ou sous la forme d'un générateur (1) à quatre pôles avec au moins 48, au moins 72, au moins 96, en particulier au moins 192 pôles de stator (6) et/ou est réalisé sous la forme d'un générateur (1) à 6 phases.

7. Eolienne (100) avec un générateur (1) selon l'une quelconque des revendications 1 à 6.
